# EUROPEAN PATENT APPLICATION

(11) **EP 4 336 096 A1**
(43) Date of publication of application: **13.03.2024**
(21) Application number: 23191862.4
(22) Date of filing: 17.08.2023
(51) Int. Cl.: F21V 8/00

(54) **FIBER ILLUMINATED BACKLIGHT AND MONITOR**

(30) Priority: 30.08.2022 US 202217823230
(71) Applicant: Meta Platforms Technologies, LLC, Menlo Park, CA 94025 (US)
(72) Inventor: MAIMONE, Andrew, Menlo Park, 94025 (US); EBERT, Ryan Michael, Menlo Park, 94025 (US); GINZTON, Nathaniel David, Menlo Park, 94025 (US); CLEARY III, Bruce A, Menlo Park, 94025 (US)
(74) Representative: Murgitroyd & Company

(57) **Abstract**

Techniques are described for backlighting electronic headset display panels. The backlight can include a light guide plate that is illuminated via a light transmitting element that is coupled to a light source. The light guide plate, in turn, illuminates the display panel. The light source is located within the headset but is disposed remotely from the display panels. A photodiode is coupled to a surface of the light transmitting element and is configured to detect a characteristic of the light transmitted by the light transmitting element.

## Description

### TECHNICAL FIELD

This application describes methods for backlighting electronic headset display panels.

### BACKGROUND

Recent years have seen significant advancements in hardware and software platforms for generating and providing extended reality experiences. Indeed, electronic headsets for providing extended reality (e.g., virtual reality, augmented reality, mixed reality, etc.) have grown in popularity, and technological advancements have facilitated its use in a variety of applications, such as conferencing, social networking, gaming, online shopping, military training, and tourism. Backlights for electronic headset display panels, such as liquid crystal displays (LCDs), illuminate the images of the display panels for view by the user. There are multiple ways for illuminating the backlights, and how the backlights are illuminated can have a dramatic effect on the image quality of the display panels.

### SUMMARY OF THE DISCLOSURE

In accordance with a first aspect of the present disclosure, there is provided an electronic headset device comprising: a light source; a light transmitting element coupled to the light source, the light transmitting element including an out-coupling structure; a light guide plate coupled to the out-coupling structure of the light transmitting element; and a panel display coupled to the light guide plate, wherein the light source is configured to transmit light via the light transmitting element to illuminate the light guide plate, and the light guide plate is configured to illuminate the panel display.

In some embodiments, the light source may comprise at least one of a laser or a light emitting diode (LED).

In some embodiments, the light source may comprise multiple laser light sources, the light transmitting element comprises one optical fiber, and each laser light source is coupled to a surface of the optical fiber.

In some embodiments, the light source may comprise multiple laser light sources, the light transmitting element comprises a plurality of optical fibers, and each laser light source is coupled to a surface of a separate optical fiber of the plurality of optical fibers.

In some embodiments, the light source may be disposed in a remote location spaced a distance from the light guide plate and the panel display.

In some embodiments, the light transmitting element may be coupled to the light guide plate at an edge of the panel display.

In some embodiments, the out-coupling structure may comprise a surface relief diffraction grating, and the surface relief diffraction grating is bonded to the light transmitting element.

In some embodiments, the light transmitting element may comprise an optical fiber or a light pipe.

In some embodiments, the out-coupling structure may be coupled to an edge of the light guide plate and is configured to uniformly illuminate the light guide plate.

In some embodiments, the electronic headset device may further comprise, an optical structure configured to focus the light from the light source onto the light transmitting element.

In some embodiments, the light transmitting element may be coupled to the light guide plate along a length of the light guide plate, wherein the outcoupling structure includes one or more light diffusing structures.

In some embodiments, the electronic headset device may further comprise: a reflective sheet covering at least a portion of a surface of the light transmitting element and at least a portion of a surface of the light guide plate.

In some embodiments, the light transmitting element may comprise an optical fiber cable, and the optical fiber cable includes random or pseudo random perturbations along at least a portion of the length of the optical fiber cable.

In some embodiments, the electronic headset device may further comprise, a photodiode coupled to a surface of the light transmitting element, wherein the photodiode is configured to detect a characteristic of the light transmitted by the light transmitting element.

In accordance with a further aspect of the present disclosure, there is provided a system comprising: a light source; a light transmitting element coupled to the light source, the light transmitting element including an out-coupling structure; a light guide plate coupled to the out-coupling structure of the light transmitting element; and a panel display coupled to the light guide plate, wherein the light source is configured to transmit light via the light transmitting element to illuminate the light guide plate, and the light guide plate is configured to illuminate the panel display.

In some embodiments, the light source may comprise multiple laser light sources, and each laser light source is coupled to a surface of the light transmitting element.

In some embodiments, the light source may be disposed in a remote location spaced a distance from the light guide plate and the panel display.

In some embodiments, the out-coupling structure may be coupled to an edge of the light guide plate and is configured to uniformly illuminate the light guide plate.

In some embodiments, the system may further comprise, an optical structure configured to focus the light from the light source onto the light transmitting element.

In some embodiments, the system may further comprise, a photodiode coupled to a surface of the light transmitting element, wherein the photodiode is configured to detect a characteristic of the light transmitted by the light transmitting element.

It will be appreciated that any features described herein as being suitable for incorporation into one or more aspects or embodiments of the present disclosure are intended to be generalizable across any and all aspects and embodiments of the present disclosure. Other aspects of the present disclosure can be understood by those skilled in the art in light of the description, the claims, and the drawings of the present disclosure. The foregoing general description and the following detailed description are exemplary and explanatory only and are not restrictive of the claims.

### BRIEF DESCRIPTION OF THE DRAWINGS

The detailed description is described with reference to the accompanying figures. In the figures, the left-most digit(s) of a reference number identifies the figure in which the reference number first appears.
FIG. 1 illustrates a perspective view of a headset, including a panel display assembly shown in the expanded detail view in accordance with an example of the present disclosure.
FIG. 2. illustrates simplified assemblies for illuminating a light guide plate in accordance with an example of the present disclosure
FIG. 3 illustrates a perspective view of a panel display stack having a fiber illuminated backlight in accordance with an example of the present disclosure.
FIG. 4 illustrates an exploded view of a panel display assembly in accordance with an example of the present disclosure.

### DETAILED DESCRIPTION

This application describes methods for backlighting electronic headset display panels. The backlight can include a light guide plate that is illuminated via a light transmitting element that is coupled to a light source. Unlike traditional methods where the light source is placed directly on or adjacent to a light guide plate and display panel, the light source can be located remotely from the electronic headset display panels. In some cases, the light source can be located on the back of the electronic headset which can provide a comfortable weight balance for the wearer. A photodiode monitor can be coupled to an end of the light transmitting element and near the electronic headset display panels. The photodiode monitor can detect if the light source reaches power levels that may be improper for the viewer (e.g., outside a normal operating range). In some cases, the photodiode monitor can determine if any breakages of the light transmitting element(s) has occurred. If it is determined that the power level of the light source is improper, the power level of the light source can be adjusted to a proper level, and/or the light source may be powered off completely. If it is determined that one or more of the fiber cable(s) are broken, the light source may be powered off.

In some instances, the light source can be a laser light source, comprising one or more lasers, such as RGB (red, green, and blue) lasers. The laser light source may have a larger color gamut than white light emitting diodes (LEDs). The laser light source can provide the display panels with more colors and may thereby enhance the image quality of the display panels for the viewer. In some examples, the laser light source may be located remotely from the display panels. For instance, the laser light source may be disposed in a rear portion of a headset, while the display panels are disposed in a front portion of the headset. In other examples, the laser light source may be disposed external to the headset and light from the external laser light source may enter (e.g., be received at an opening or optical interface disposed on) a rear portion of the headset. In still other examples, the laser light source may be disposed in a front portion of the headset but at a location spaced from the display panels. The light source can be located on the back of the user's head when the electronic headset is worn. This distributes the weight evenly between the front of the headset that covers the wearer's eyes and the back of the electronic headset that wraps around the back of the wearer's head.

Additionally, the heat produced by the electronic components of the electronic headset display can be mitigated due to the location of the light source. The electronic headset display and the electronic components may have temperature parameters that must be maintained when the electronic headset is powered on. The heat produced by the light source does not add additional heat to the headset display due to the external location of the light source in relation to the headset display. Regardless of the location of the laser light source, an end of a light transmitting element can be coupled to the light source and can be configured to transmit the light to the opposite end of the light transmitting element that is coupled to a light guide plate. In some cases, the light transmitting element can include an optical fiber cable. In some cases, multiple optical fibers of an optical fiber cable can be coupled to the light source and the light guide plate. In some cases, an optical fiber that includes only one optical fiber can be coupled to multiple light sources. In some cases, an optical fiber that includes multiple optical fibers can be coupled to multiple light sources. For instance, separate optical fibers of the optical fiber cable can be coupled to each color source of the RGB laser light source. In another instance, each optical fiber of the optical fiber cable can be coupled to a single light source.

In some instances, additional optical structures can be disposed between the light transmitting element and the light source. For example, one or more lens, can be applied to focus the light beams from the light source onto the light transmitting element, to ensure that the light beam is within the numerical aperture of the light transmitting element. The numerical aperture determines the largest angle an incident light beam can have for total internal reflectance in the core of the optical fiber and the additional optical structure can increase the efficiency of the light transmitted through the light transmitting element. In some instances, the light source can be coupled to the light transmitting element at a location along the length of the light transmitting element and can inject light into the side of the light transmitting element.

In some instances, the light transmitting element can include an optical fiber cable. The optical fiber cable can include a single-mode (or mono-mode) optical fiber and/or a multi-mode optical fiber. The optical fiber can be made from various flexible, transparent materials such as silica glass, plastic, etc. In some instances, a multi-mode optical fiber enables multiple light modes to be transmitted through the optical fiber. The multi-mode optical fiber has a large numerical aperture that allows for less stringent alignment requirements and is less fragile than a single-mode optical fiber. In some instances, the light transmitting element can be de-speckled by mechanically perturbing the light transmitting element such that the bends formed in the light transmitting element vibrate. Some high coherence light sources, such as laser light sources, can cause image speckling. A vibratory motor or other mechanical actuation device can be disposed in the housing of the headset at a location along the length of the light transmitting element to vibrate, move, or otherwise, perturb the light transmitting element to de-speckle the optical signal. The de-speckling device may maximize performance and reliability in illumination of the light transmitting element, with little optical loss. Additionally, the reduction of speckle is essential for applications where uniform intensity provided by the light source is ideal, such as illuminating a back light for an electronic headset display.

The light transmitting element can include an outcoupling structure to transmit the light from the light transmitting element into the light guide plate. The outcoupling structure can function to break the total internal reflection conditions of the optical fiber and causes the light to exit the optical fiber and enter the light guide plate. In some instances, the outcoupling structure is coupled to an edge of the light guide plate and makes contact with the light guide plate along a portion of the perimeter of the light guide plate. The outcoupling structure can be co-designed with the light guide plate such that the light guide plate uniformly illuminates the display panel. For instance, the outcoupling structure can be designed to leak out light into the light guide plate at mostly uniform intensity over the light guide plate by progressively increasing out-coupling efficiency along the length of the light guide plate. Uniformly illuminating the light guide plate allows for a higher quality image to be viewed by the electronic headset wearer. Outcoupling structures can include surface relief structures in the light transmitting element. Additionally, outcoupling structures may include diffusing structures, such as grooves, protrusions, depressions, a rough surface, and/or gratings. In some instances, the outcoupling structure can include an optical structure disposed external to the light transmitting element. The optical structure can be placed on the light transmitting element between the light transmitting element and the light guide plate. In this instance, the optical structure can include devices or structures that increase the intensity of the light transmitted from the light transmitting element and illuminates the light guide plate. For instance, the optical structure can include a surface relief diffraction grating that can be bonded to the light transmitting element.

The light guide plate is an optical light guide that is configured to generate a substantially uniform area of light when illuminated by the light that is transmitted through the light transmitting element. The light guide plate can include a transparent plate that can be made from an acrylic, such as polymethyl methacrylate (PMMA), or glass. In some instances, the light guide plate is illuminated at one or more edges (e.g., left, right, top, or bottom) of the light guide plate by the light transmitting element and is designed for high uniformity of light intensity. The light guide plate can be disposed adjacent to the display panel to illuminate the display panel. In some instances, additional optical sheets can be applied to the light guide plate to increase the uniformity or change the angular light distribution of the light guide plate. Optical sheets can include diffusion sheets, prism sheets, and/or reflection sheets, such as an enhanced specular reflector (ESR). The optical sheets allow for the light guide plate to be made thinner, while maintaining or increasing the light intensity of the light guide plate.

In some instances, a photodiode can be placed at or near the end of the light transmitting element, the light guide plate, and/or display panel. The photodiode can measure the amount of light reaching the end of the optical fiber by measuring a small amount of light that is not transmitted to the light guide plate via the outcoupling structure. By monitoring the light near the light guide plate and display panel, the headset can detect improper operating conditions of the light source and can prevent or mitigate the operating conditions. For instance, the photodiode can be used in a power control loop to drive the laser light source at a substantially constant power level. In another instance, the photodiode can be used to detect a breakage or imperfection in the optical fiber. A breakage in the optical fiber can make the headset operate improperly. Unstable brightness and/or light leakage from the optical fiber (or the headset) can be the undesired effects of an optical fiber breakage. In another instance, the photodiode can detect a change in color of the light source, such as an RGB laser. The photodiode can be made from broadband semiconductor materials such as silicon, germanium, gallium arsenide, and/or indium gallium arsenide, and can be designed to handle the power and spectrum of the laser light source.

In some examples, an electronic headset device can comprise a light source, a light transmitting element coupled to the light source that includes an out-coupling structure, a light guide plate coupled to the out-coupling structure, and a panel display that is coupled to the light guide plate. The light source can be configured to transmit light via the light transmitting element to illuminate the light guide plate, and the light guide plate can be configured to illuminate the panel display.

In some examples, the light source can include a laser and/or a light emitting diode (LED). In some examples, the light source can include multiple laser light sources, the light transmitting element can include one optical fiber, and each laser light source can be coupled to a surface of the optical fiber. In some examples, the light source can include multiple laser light sources, the light transmitting element can include a plurality of optical fibers, and each laser light source can be coupled to a surface of a separate optical fiber of the plurality of optical fibers. In some examples, the light source can be disposed in remote location away from the light guide plate and the panel display.

In some examples, the light transmitting element can be coupled to the light guide plate at an edge (top, bottom, left, and/or right) of the panel display. In some examples, the light transmitting element can include a plastic material and/or a glass material. In some examples, the light transmitting element can include random or pseudo random perturbations along at least a portion of the length of the light transmitting element.

In some examples, the out-coupling structure can be coupled to an edge (top, bottom, left, and/or right) of the light guide plate and can be configured to uniformly illuminate the light guide plate. In some examples, an optical structure that is configured to focus the light emitted by the light source onto the light transmitting element can be included in the electronic headset device. In some examples, the light transmitting element can be coupled to the light guide plate along a length of the light guide plate. The outcoupling structure can include one or more light diffusing structures.

In some examples, the electronic headset device can include a reflective sheet, such as an enhanced specular reflector (ESR) sheet, that can cover at least a portion of a surface of the light transmitting element and at least a portion of a surface of the light guide plate. In some examples, a photodiode can be coupled to a surface of the light transmitting element. The photodiode can be configured to detect a characteristic of the light transmitted by the light transmitting element.

In some examples, a method for illuminating a display panel of an electronic headset device can include emitting light from a light source, transmitting the light from the light source via a light transmitting element to illuminate a light guide plate located remotely form the light source, emitting light from the light guide plate to illuminate the display panel that is located remotely from the light source, detecting, via a photodiode, a characteristic of the light that is transmitted by the light transmitting element at a location proximate the display panel and remote form the light source, and determining, via one or more processors of the electronic headset device, a power level of the light source based at least in part on the characteristic detected by the photodiode.

In some examples, the one or more processors can determine if the power level is above a threshold, and in response to at least determining the power level is above the threshold, the one or more processors adjusts the power level of the light source to a power level below the threshold. In some examples, the response to at least determining that the power level is above a threshold, the one or more processors can turn off the light source. In some examples, the light source can include an RGB (red, green, and blue) laser, and in response to at least determining that the power level is above a threshold, the one or more processors can adjust the power level of a color of the RGB laser. In some examples, the light source can include multiple laser light sources, each laser light source can be coupled to a surface of the light transmitting element, and in response to at least determining that power level is above a threshold, the one or more processors can adjust the power level of one laser light source of the multiple laser light sources. In some examples, the one or more processors can determine if the power level fluctuates between a first power level and a second power level, and in response to at least determining that the power levels fluctuate, the one or more processors can stabilize the power level of the light source at a power level below a threshold.

Any or all of the foregoing instances may be implemented alone or in combination with any one or more of the other instances described herein.

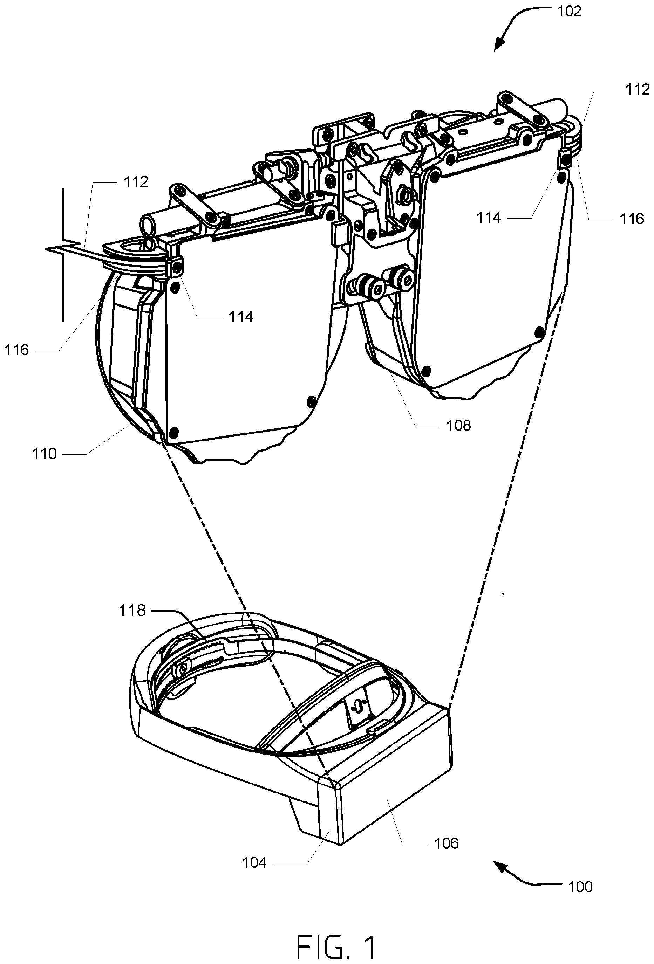

FIG. 1 illustrates a perspective view of an example headset 100, including an example panel display assembly 102, shown in the excerpted view. The headset 100 can include a housing 104, an optical assembly 106, and the panel display assembly 102. The optical assembly 106 can be disposed in a substantially central region of the housing 104. The panel display assembly can be coupled to the optical assembly 106. The optical assembly 106 can include a first lens 108 (e.g., a left lens) and a second lens 110 (e.g., a right lens) spaced from the first lens 108. In some examples, each of the first lens 108 and the second lens 110 can include a plurality of optical elements. For example, each of the first lens 108 and the second lens 110 can include one or more optical elements and one or more source elements. The one or more optical elements may include, for example, but not limited to, shaped lenses, holographic lenses, phase lenses, polarizing elements, reflecting elements, etc. The one or more source elements may include, for example, but not limited to, display panels, backlight elements, projectors, filters, occlusion elements, etc.

In the particular example shown in FIG. 1, each of the first lens 108 and second lens 110 can include a display panel (not shown) and a backlight element (not shown). The backlight element can include a light guide plate that is placed adjacent to the display panel. A light source 118 can be disposed at a location remotely from the lens, such as the back of the headset 100 and can emit light that is then transmitted to the light guide plate via a light transmitting element 112 (or optical fiber 112). The optical fiber 112 can enter a side of the lens to be coupled with the light guide plate. The optical fiber 112 can be fastened to the side of the lens via a clamp 114 while a stabilizer 116 maintains and limits the bend radius of the optical fiber 112.

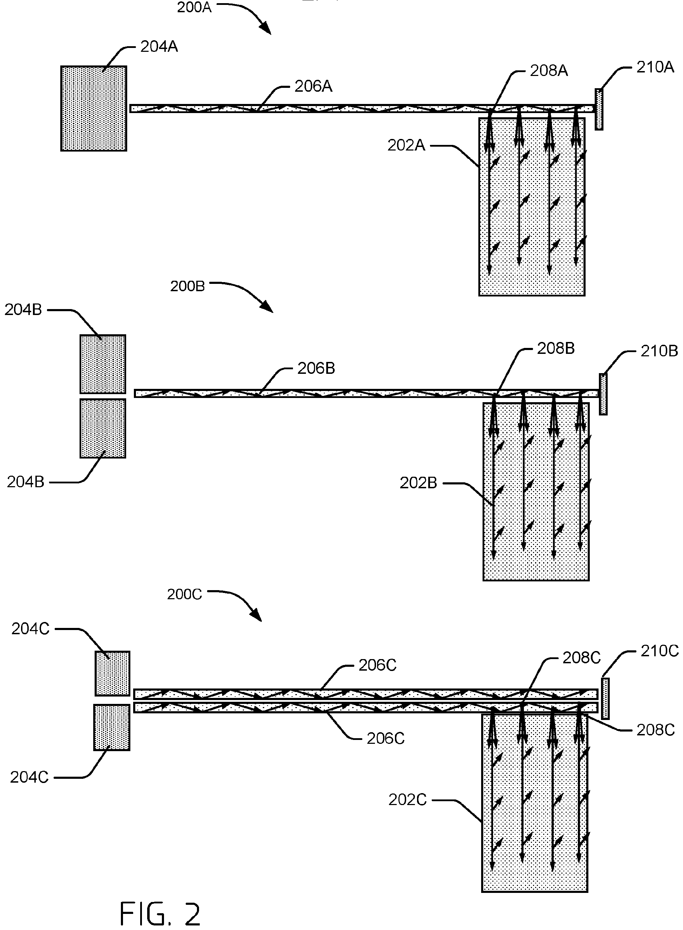

FIG. 2 illustrates a simplified assemblies 200A, 200B and 200C for illuminating a respective light guide plate 202A, 202B and 202C of respective electronic headsets (not shown). Additionally, the light guide plate (202A, 202B and 202C) can be configured to transmit the light to a display panel (not shown) that can be disposed directly adjacent to the light guide plate (202A, 202B and 202C). The light source(s) (204A, 204B and 204C) emits light that can be transmitted to the respective light guide plate (202A, 202B, and 202C) via the respective optical fiber cable(s) (206A, 206B and 206C).

In some examples, the light source can include a single light source 204A that can be an LED or a laser light source. The optical fiber cable 206A can be coupled to the light source 204A by cleaving the end of the optical fiber cable 206A and in-coupling the optical fiber cable 206A into the light source 204A. The light source 204A can also be coupled to a side surface of the optical fiber cable 206A. Additionally, an optical structure (not shown) that focuses the light emitted by the light source 204A into the optical fiber cable 206A, such as a lens, can be placed between the light source 204A and optical fiber cable 206A. The optical structure (not shown) can change light beam to match the parameters required by the optical fiber cable.

Due to total internal reflection (TIR), light from the optical fiber cable 206A can be transmitted through the optical fiber cable 206A. Light can exit the optical fiber 206A and be transmitted to the light guide plate 202A via the out-coupling structure 208A. The out-coupling structure 208A can function to break the total internal reflection conditions of the optical fiber cable 206A and causes the light to exit the optical fiber cable 206A and enter the light guide plate 202A. In some examples, the out-coupling structure 208A can include diffusing structures, such as grooves, protrusions, depressions, a rough surface, and/or gratings. The out-coupling structure 208A can be coupled to an edge of the light guide plate 202A and can contact the light guide plate 202A along the length of the light guide plate 202A. In some examples, the outcoupling structure 208A can be co-designed with the light guide plate 202A such that the light guide plate 202A is uniformly illuminated by the light emitted by the optical fiber cable 206A. In some examples, the out-coupling structure 208A can be designed to leak out light into the light guide plate 202A at roughly uniform intensity over the light guide plate 202A by progressively increasing out-coupling efficiency along the length of the light guide plate 202A.

A photodiode (210A, 210B and 210C) can be located at a surface of the respective optical fiber cable (206A, 206B and 206C) that is near the light guide plate (202A, 202B and 202C). In some examples, light that is transmitted through the optical fiber cable (206A, 206B and 206C) can also be transmitted to the respective photodiode (210A, 210B and 210C). The photodiode can be configured to detect a characteristic of the light. In some examples, a processor (not shown) can determine the power level of the light source (204A, 204B and 204C) that is based at least in part on the characteristic that is detected by the photodiode (210A, 210B and 210C). For safety purposes, the processor can adjust the power level of the light source to a level that is safe for the wearer of the electronic headset device. For example, the photodiode (210A, 210B and 210C) can detect a characteristic of the light that is emitted by the optical fiber cable (206A, 206B an 206C), and the processor can determine that the power level is at an improper power level based on the characteristic. In response, the processor can adjust the power level of the light source to a safer power level, such as switching off the light source. In some examples, the processor can adjust a color of the light source (204A, 204B and 204C), such as an RGB laser.

In some examples, the light source can include multiple laser light sources 204B, such as a RGB laser light source. The optical fiber cable 206B can include a single optical fiber and can be coupled to multiple laser light sources 204B at an edge surface of the optical fiber cable 206B. In some examples, the light source 204B can be coupled to a side surface (not shown) of the optical fiber cable 206B. In some examples, the light source can include multiple light sources 204C, such as an RGB laser. Each individual color can be coupled to one of the multiple optical fibers of the optical fiber cable 206C. In some examples, each one of the optical fibers of the optical fiber cable 206C can be coupled to a separate edge (not shown) of the light guide plate 202C such that the light transmitted through optical fiber cable 206C illuminates multiple sides of the light guide plate 202C.

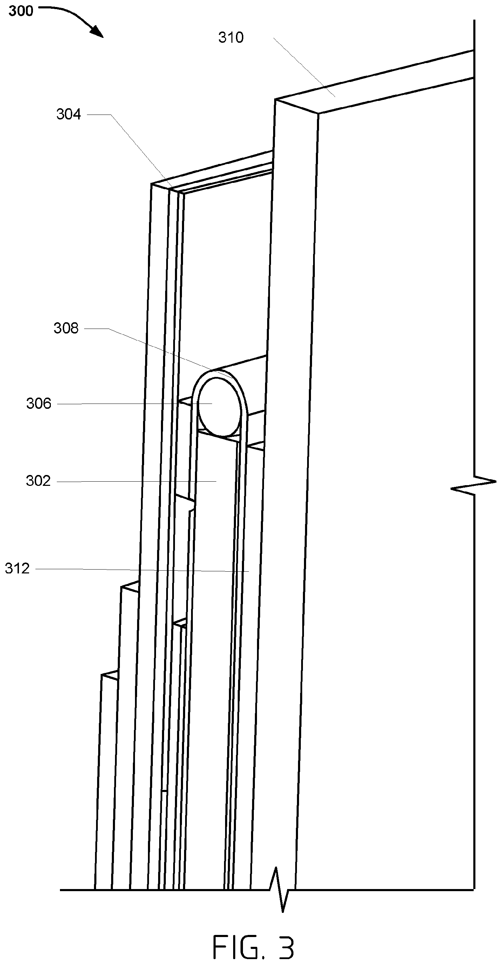

FIG. 3 illustrates a perspective view of an example panel display assembly 300. The display panel assembly 300 includes a light guide plate 302 that is disposed adjacent to the display panels 304. The light transmitting element 306 (or optical fiber cable 306) is fixed to the top of the light guide plate 302 along the length of the light guide plate 302. The optical fiber cable 306 can be stripped and sanded to form outcoupling structures along the length of the optical fiber cable 306. The outcoupling structures can break the total internal reflection of the optical fiber cable 306 and allows the light to diffuse into the top of the light guide plate 302. The light transmitted from the optical fiber cable 306 should uniformly illuminate the light guide plate 302. This allows for a more accurate image to be displayed to the user from the display panel 304.

A highly reflective sheet 308, such as an enhanced specular reflector (ESR), can wrap around the optical fiber cable 306 and light guide plate 302. The reflective sheet 308 covers the top half of the optical fiber cable 306 and a surface of the light guide plate 302, opposite the side that opposes the display panel 304. The contact between optical fiber cable 306 and light guide plate 302 can be enhanced due to the reflective film 308 wrapping around the optical fiber cable 306. A reflective film 308, such as an ESR, increases the intensity of the light that is transmitted to the display panel 304 from the light guide plate 302.

A cover plate 310 can be fixed to the side of the light guide plate 302 via a foam film 312. The cover plate 310 maintains and enhances the contact between light guide plate 302 and display panel 304, while providing structural support to the panel display assembly 300. The foam film 312 absorbs the compression between the light guide plate 302 and cover plate 310.

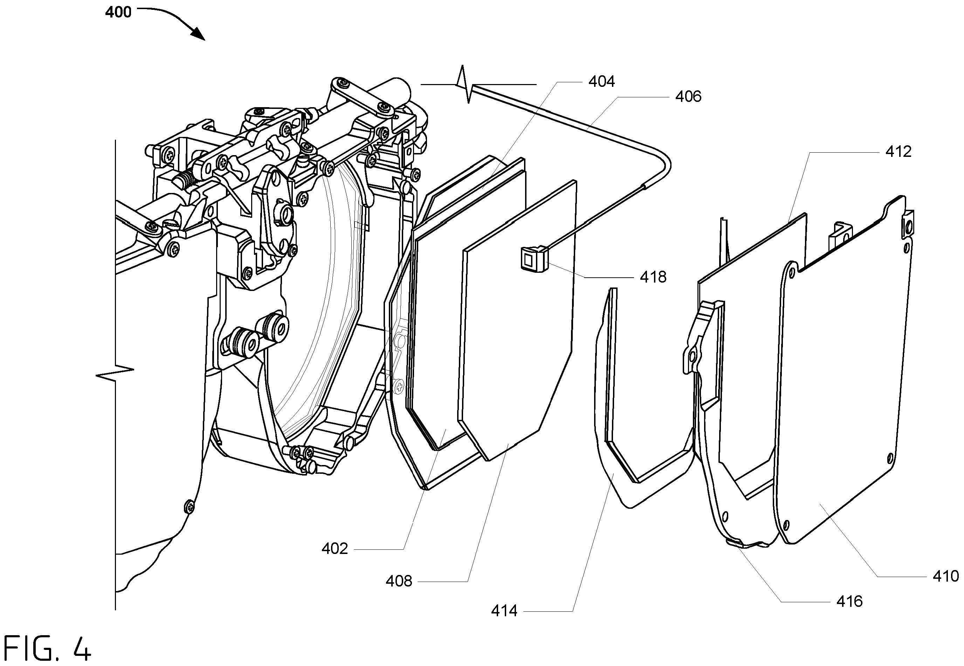

FIG. 4 illustrates an exploded view of an example panel display assembly 400 (similar to the example panel display assembly 300 of FIG. 3). Light from the light source (not shown) is transmitted to the panel display assembly 400 via optical fiber cable 406. The optical fiber cable 406 can enter the panel display assembly 400 near the side of the display panel 404. It can be stripped and sanded to form an outcoupling structure that is fixed to the top side of the light guide plate 402, along the length of the light guide plate 402. The outcoupling structure can be configured to break the internal reflection of the light transmitted through the optical fiber cable and causes the light to diffuse into the light guide plate 402. The outcoupling structure can be co-designed with the light guide plate 401 such that the light guide plate 402 uniformly illuminates the display panel 404. In some examples, the outcoupling structure can be designed to leak out light into the light guide plate 402 at roughly uniform intensity over the light guide plate by progressively increasing out-coupling efficiency along the length of the light guide plate 402. Uniformly illuminating the light guide plate 402 allows for a higher quality image to be viewed by the electronic headset wearer. Additionally, outcoupling structures can be diffusing structures, such as grooves, protrusions, depressions, a rough surface, and/or gratings.

A reflective film 408 can wrap around the optical fiber cable 406 and light guide plate 402 to enhance the intensity of light that illuminates the display panels 404. This increased intensity allows for the light guide plate 402 to be made thinner and decreases the weight of the electronic headset. Photodiode 418 is placed at the end of the optical fiber cable 406 near the light guide plate 402 and display panel 404. Photodiode 418 measures the small amount of light that is not transmitted to the light guide plate 402. Improper operating parameters of the light source (not shown) can be detected by the photodiode 418. In some examples, the photodiode 418 can be used in a power control loop to drive the light source at a constant power level. In some examples, the photodiode 418 can be used to detect a breakage in the optical fiber cable 406. A breakage in the optical fiber can be diminish the image displayed to the eyes of the electronic headset wearer due to the unstable brightness caused by the breakage. In some examples, the photodiode 418 can be used to detect if the power level of the light source reaches an improper light intensity. In another example, the photodiode can detect a change in color of the light source, such as detecting the intensity of each color in an RGB laser light source. The photodiode 418 is made from broadband semiconductor materials such as silicon, germanium, gallium arsenide, and/or indium gallium arsenide, and can be designed to handle the power of a laser light source.

A cover plate 410 and bracket 416 is fixed to the side of the light guide plate 402 via a foam film 412 that is configured to absorb the compression created by the cover plate 410 and bracket 416. A light blocker 414 is included to prevent light outside of the panel display assembly 400 from illuminating the light guide plate 402 and display panel 404.

The language used in the specification has been principally selected for readability and instructional purposes, and it may not have been selected to delineate or circumscribe the patent rights. It is therefore intended that the scope of the patent rights be limited not by this detailed description, but rather by any claims that issue on an application based hereon. Accordingly, the disclosure of the examples is intended to be illustrative, but not limiting, of the scope of the patent rights, which is set forth in the following claims. Modifications and variations are contemplated considering the above disclosure.

### CONCLUSION

Although the discussion above sets forth example implementations of the described techniques, other architectures may be used to implement the described functionality and are intended to be within the scope of this disclosure. Furthermore, although the subject matter has been described in language specific to structural features and/or methodological acts, it is to be understood that the subject matter defined in the appended claims is not necessarily limited to the specific features or acts described. Rather, the specific features and acts are disclosed as exemplary forms of implementing the claims.

## Claims

1. An electronic headset device comprising:
a light source;
a light transmitting element coupled to the light source, the light transmitting element including an out-coupling structure;
a light guide plate coupled to the out-coupling structure of the light transmitting element; and
a panel display coupled to the light guide plate, wherein the light source is configured to transmit light via the light transmitting element to illuminate the light guide plate, and the light guide plate is configured to illuminate the panel display.

2. The electronic headset device of claim 1, wherein the light source comprises at least one of:
i. a laser;
ii. a light emitting diode (LED);
iii. multiple laser light sources, the light transmitting element comprises one optical fiber, and each laser light source is coupled to a surface of the optical fiber;
iv. multiple laser light sources, the light transmitting element comprises a plurality of optical fibers, and each laser light source is coupled to a surface of a separate optical fiber of the plurality of optical fibers.

3. The electronic headset device of claim 1 or claim 2, wherein the light source is disposed in a remote location spaced a distance from the light guide plate and the panel display.

4. The electronic headset device of claim 1, claim 2 or claim 3, wherein the light transmitting element is coupled to the light guide plate at an edge of the panel display; and/or preferably
wherein the light transmitting element comprises an optical fiber or a light pipe.

5. The electronic headset device of any one of the preceding claims, wherein the out-coupling structure comprises a surface relief diffraction grating, and the surface relief diffraction grating is bonded to the light transmitting element; and/or preferably
wherein the out-coupling structure is coupled to an edge of the light guide plate and is configured to uniformly illuminate the light guide plate.

6. The electronic headset device of any one of the preceding claims, further comprising, an optical structure configured to focus the light from the light source onto the light transmitting element.

7. The electronic headset device of any one of the preceding claims, wherein the light transmitting element is coupled to the light guide plate along a length of the light guide plate, wherein the outcoupling structure includes one or more light diffusing structures.

8. The electronic headset device of any one of the preceding claims, further comprising:
a reflective sheet covering at least a portion of a surface of the light transmitting element and at least a portion of a surface of the light guide plate.

9. The electronic headset device of any one of the preceding claims, wherein the light transmitting element comprises an optical fiber cable, and the optical fiber cable includes random or pseudo random perturbations along at least a portion of the length of the optical fiber cable.

10. The electronic headset device of any one of the preceding claims, further comprising, a photodiode coupled to a surface of the light transmitting element, wherein the photodiode is configured to detect a characteristic of the light transmitted by the light transmitting element.

11. A system comprising:
a light source;
a light transmitting element coupled to the light source, the light transmitting element including an out-coupling structure;
a light guide plate coupled to the out-coupling structure of the light transmitting element; and
a panel display coupled to the light guide plate, wherein the light source is configured to transmit light via the light transmitting element to illuminate the light guide plate, and the light guide plate is configured to illuminate the panel display.

12. The system of claim 11, wherein the light source comprises multiple laser light sources, and each laser light source is coupled to a surface of the light transmitting element.

13. The system of claim 11 or claim 12, wherein the light source is disposed in a remote location spaced a distance from the light guide plate and the panel display.

14. The system of claim 11, claim 12 or claim 13, wherein the out-coupling structure is coupled to an edge of the light guide plate and is configured to uniformly illuminate the light guide plate.

15. The system of any one of claims 11 to 14, further comprising one or more selected from:
i. an optical structure configured to focus the light from the light source onto the light transmitting element;
ii. a photodiode coupled to a surface of the light transmitting element, wherein the photodiode is configured to detect a characteristic of the light transmitted by the light transmitting element.
